# EUROPÄISCHE PATENTANMELDUNG

(11) **EP 0 858 981 A1**
(43) Veröffentlichungstag der Anmeldung: **19.08.1998**
(21) Anmeldenummer: 98100377.5
(22) Anmeldetag: 12.01.1998
(51) Int. Cl.: C04B 22/08, C04B 28/02

(54) **Erhärtungsbeschleuniger für Zement**

(30) Priorität: 14.02.1997 CH 342/97
(71) Anmelder: Sika AG, vorm. Kaspar Winkler & Co., CH-8048 Zürich (CH)
(72) Erfinder: Bürge, Theodor A., 8954 Geroldswil (CH); Mai, Dieter, 8865 Bilten (CH); Péray, Kurt, Orlando, FL 32837 (US)
(74) Vertreter: Blum, Rudolf Emil Ernst

(57) **Zusammenfassung**

Es werden flüssige oder dispersionsförmige Abbinde- und Erhärtungs-beschleuniger für Zement und diesen enthaltende Gemische beschrieben, die im wesentlichen frei von Alkalimetallen und Chloriden sind und keine basischen Eigenschaften besitzen. Die Abbindebeschleuniger enthalten als Komponente
1. Aluminiumsulfat,
2. amorphe Kieselsäure,
3. anorganische und/oder organische Thixotropiermittel.

Durch diese Mischungen werden im Vergleich zu der Verwendung alkalischer Beschleuniger eine wesentliche Verkürzung der Abbindezeit und eine rasche Entwicklung hoher Druckfestigkeiten erreicht.

## Beschreibung

Die vorliegende Erfindung betrifft einen Abbinde- und Erhärtungsbeschleuniger für Zement, der insbesondere im wesentlichen alkalifrei ist und als Lösung oder als Dispersion verwendet werden kann.

Es sind bereits viele Substanzen bekannt, welche das Abbinden und Erhärten von Beton beschleunigen. Die gebräuchlichsten sind u.a. stark alkalisch reagierende Stoffe, wie Alkalihydroxide, Alkalikarbonate, Alkalisilikate, Alkalialuminate, und Erdalkalichloride. Bei den stark alkalisch reagierenden Stoffen treten unerwünschte Belästigungen des Verarbeiters auf. So können solche Produkte die Haut sehr stark verätzen und Augenentzündungen und Hornhautverätzungen verursachen, welche die Sehfähigkeit beeinträchtigen können. Durch Einatmen des beim Verarbeiten entstehenden Staubes können auch schädliche Auswirkungen auf die Atemwege entstehen.

Betontechnologisch gesehen reduzieren stark alkalische Abbindebeschleuniger die Endfestigkeiten, vergrössern das Schwinden, was zu Rissbildung führen kann und deshalb die Dauerhaftigkeit eines Bauwerkes in Frage stellt.

Alkalihaltige Beschleuniger können ausserdem ausgewaschen werden und führen dadurch zu Verunreinigungen von Grund- und Trinkwasser sowie von Flüssen und Seen. Diese Verunreinigungen können auch zu Versinterungen von Drainagen und Entwässerungskanälen führen.

Chloridhaltige Abbindebeschleuniger sind in der Regel auf einer Baustelle unerwünscht, weil sie sowohl an den Armierungseisen im Beton wie auch an Baustellengeräten zur Korrosion führen können.

Im weiteren ist bekannt, dass chloridhaltige Abbindebeschleuniger die Chemikalienbeständigkeit, vor allem die Sulfatbeständigkeit des Zementes, stark reduzieren.

Aus JP 511 444 25 ist ein Beschleuniger bekannt, der amorphes Aluminiumhydroxid und gegebenenfalls eine Mischung aus Gips-Dihydrat, -Hemihydrat und -Anhydrit enthält.

Dieser Beschleuniger ist für die Verwendung in flüssiger Form ungeeignet, er ist nicht lagerstabil, da Hemihydrat und Anhydrit mit Wasser aushärten.

Ziel der vorliegenden Erfindung war es deshalb, einen Abbinde- und Erhärtungsbeschleuniger für Zement bereitzustellen, der im wesentlichen alkalifrei ist und als wässrige Lösung oder als Dispersion eingesetzt werden kann. Ein weiteres Ziel war die Bereitstellung eines Verfahrens zur Beschleunigung des Abbindens und Erhärtens von Zement sowie daraus hergestellten Mörtels und Betons sowie die Verwendung eines im wesentlichen alkalifreien Abbinde- und Erhärtungsbeschleuniger

Dieses Ziel wurde gemäss den unabhängigen Ansprüchen erreicht. Weitere Aspekte der Erfindung sowie bevorzugte Ausführungsarten sind in den Neben- resp. Unteransprüchen definiert.

Die meisten heute gebräuchlichen Aluminiumkomponenten für die Beschleunigung des Abbindens und Erhärtens von Beton, wie Kalziumaluminate und Calciumsulfoaluminate, sind ungeeignet für flüssige Beschleuniger, da sie mit Wasser reagieren. Die löslichen Salze, wie Aluminiumsulfate oder Aluminiumnitrate, sind geeignet, sofern sie in hoher Konzentration in Lösung bleiben und nicht auskristallisieren. Andere Salze, wie Alaune enthalten unerwünschte Alkalien.

Es wurde nun überraschenderweise gefunden, dass insbesondere eine Mischung, enthaltend
1. ein Aluminiumsalz ausgewählt aus der Gruppe umfassend Sulfat, Nitrat, Glykolat, Acetat, Formiat oder Mischungen derselben in hoher Konzentration gelöst in Wasser,
2. amorphe Kieselsäure wie Silica Fume, pyrogene Kieselsäure oder Kieselsäure Sole,
3. wasserlösliche und im alkalischen Bereich quellfähige Polymere,
   einen sehr guten alkalifreien flüssigen Abbinde- und Erhärtungsbeschleuniger für Zement darstellt.

In einer besonders bevorzugten Ausführungsform wird Aluminiumsulfat als Aluminiumsalz gemäss Punkt 1 verwendet. Vorzugsweise enthält der erfindungsgemässe Beschleuniger mindestens 5 Gew.-% amorphe Kieselsäure und bis zu 95 Gew.-% der Aluminiumsalzes.

In der vorliegenden Erfindung wurde zum ersten Mal ein in flüssiger Form anwendbarer, alkalifreier Beschleuniger mit ausgezeichneter Abbinde- und Erhärtungsbeschleunigung in einem Produkt vereint.

Für diesen können bzw. werden die obengenannten Komponenten eingesetzt:
- organische Kohlensäureester wie Ethylen- und/oder Propylencarbonat;
- bis zu 10 % Zusätze von Dispergierhilfsmitteln wie sulfonierte Melamin- oder Naphthalin-Formaldehyd-Kondensate, Polymere oder Copolymere der Acryl- oder Methacrylsäure oder deren Derivate, Phosphonsäurederivate, Phosphate und Polyphosphate, Zitronensäure oder Salze der genannten Säuren,
- bis zu 5 % Verdicker wie Bentonit, Bentone, amorphe Siliziumdioxide, fermentierte organische Biopolymere, Polyglykolether, Alginate, Acrylat- oder Urethanverdicker, organische Kohlensäureester oder Mischungen derselben,
- bis zu 5 % weitere Zusätze zur Vereinfachung der Produktion oder Applikation wie Konservierungsmittel, Entschäumer, Verflüssiger, etc.

Zur Herstellung des erfindungsgemässen Beschleunigers in Dispersionsform wird vorzugsweise ein Dispergiermittel, in die wässrige Phase eingeführt. Zur Stabilisierung wird vorzugsweise ein Verdicker eingesetzt. Sehr gut geeignete Dispergierhilfsmittel/Stabilisatoren sind beispielsweise Polyacrylsäuren und/oder Acrylsäure-Copolymere.

Die erfindungsgemässen Beschleuniger können nicht nur als Lösung oder als Dispersion in Wasser, sondern auch als Pulver zur Anwendung gelangen. Durch den Einsatz geeigneter Dispergierhilfsmittel können Dispersionen mit einem Feststoffgehalt von bis zu 80 % hergestellt werden.

Bei der Verwendung der Beschleuniger in Pulverform werden diese mit dem trockenen Zement oder mit dem trockenen Mörtel oder Beton vorgemischt und diese Mischung anschliessend durch Zugabe von Wasser ausgehärtet. Obschon diese Verwendung gute Resultate liefert, ist die Verwendung der Beschleuniger als Lösung oder als Dispersion bevorzugt, da sich damit leichter homogene Durchmischung mit der bindemittelhaltigen Komponente erzielen lässt.

Selbstverständlich können die erfindungsgemässen Beschleuniger auch vor der Anwendung im Werk bei der Bindemittelherstellung oder unmittelbar bei der Verwendung dem trockenen Bindemitel alleine oder dem vorfabrizierten trockenen Mörtel oder Beton zugemischt werden. Die Zugabe kann im Mischer in der Förderpumpe, der Förderleitung, der Vorbenetzungsdüse, der Spritzdüse erfolgen oder der Beschleuniger kann über einen statischen Mischer mit einem Pulverdosiergerät oder einem Flüssigdosiergerät direkt in die Mischung oder mit der Förderluft zugegeben werden.

Das bevorzugte Aluminiumsulfat ist Bestandteil des Beschleunigers, damit sich im Beton das Mineral Ettringit bilden kann, welches massgeblich für die Erhärtungsbeschleunigung verantwortlich ist.

Das Mol-Verhältnis Aluminium zu Sulfat (umfassend alle im Beschleuniger enthaltenen Sulfationen) liegt üblicherweise im Bereich von 0,1 bis 10.

Der Beschleuniger gelangt üblicherweise in Mengen von 0,1 bis 20 Gewichtsprozent (Trockensubstanz), bezogen auf das Gewicht des Zementes, zum Einsatz.

Anwendungsmöglichkeiten dieses Beschleunigers liegen in der Herstellung vorfabrizierter Elemente und dem Beschleunigen von auf der Baustelle hergestelltem Beton. Im ersten Falle kann die übliche Erhärtungsbeschleunigung durch Wärme (Elektro- oder ÷lheizung oder Dampf) verkürzt oder gar eliminiert werden oder es kann auch bei tiefer Temperatur weiter betoniert werden. Anwendungen ergeben sich auch bei der Herstellung rasch abbindender Zement- und Mörtelmischungen, speziell zum Fixieren von Fertigteilen, Gussstücken, etc.

Ein weiteres Einsatzgebiet ist das Beschleunigen der Erhärtung von Zementaufschlämmungen, welche für die Abdichtung und Verfestigung von Fels, Lockergestein und Böden verwendet wird.

Ein besonderes Einsatzgebiet ist der Spritzmörtel und Spritzbeton. Solche Mörtel und Betone dienen zur Herstellung von Bauwerken des Hoch- und Tiefbaus, sowie für den Ausbau und die Auskleidung von unterirdischen, natürlich oder künstlich geschaffenen Hohlräumen, wie Stollen-, Tunnel- oder Bergbauten, bei welchen der Beton den statischen Erfordernissen entsprechen, sowie wasserdicht sein muss. Sie dienen ebenfalls zur Konsolidierung von Baugruben, Böschungen, lockeren Felswänden, etc.

Die erfindungsgemässen Beschleuniger sind sowohl für das Trocken- als auch für das Nassspritzverfahren geeignet.

Die Erfindung wird in der Folge anhand von Beispielen zusätzlich erläutert.

### Beispiel 1

In einem Versuchsstollen wurden Trockenspritzversuche durchgeführt. Zur Verwendung kam eine Rotorspritzmaschine AL 246 mit einer mittleren Pumpleistung von 2 m³/h. Die 40 m lange Schlauchleitung hatte einen Innendurchmesser von 38 mm; es wurde eine Normaldüse, konisch mit 32 mm Enddurchmesser verwendet. Die Flüssigbeschleunigervarianten wurden mittels einer Dosierpumpe AL 503 direkt in den Wasserzustrom dem Trockengemisch zugeführt.

Als Trockenmischungen wurden verwendet: CEM I 42.5 (Zementtyp mit einer Normfestigkeit von 42.5 Mpa nach 28 Tagen) 350 kg/m³
- Zuschlagstoffe:: 60 % Sand 0/4 mm Eigenfeuchte ca. 2.5 %
40 %Kies 4/8 mm Eigenfeuchte ca. 2.5 %

Die beiden folgenden Flüssigbeschleuniger wurden untersucht:
A) Aluminiumsulfatlösung
B) Aluminiumsulfatlösung + Hochleistungsverflüssiger

Das Abbindeverhalten wurde über den Penetrationswiderstand mit einer Mecmesin Microprocessor Force Gauche und einem Nadelaufsatz (⌀ 3 mm) bestimmt.

**Tabelle 1.1**

| Beschleunigerdosierung | Penetrationswiderstand in **[**N**]**⁽¹⁾ nach | | | | | | | | |
|---|---|---|---|---|---|---|---|---|---|
| **[**Minuten**]** | 1' | 6' | 10' | 20' | 30' | 60' | 90' | 120' | 180' |
| 6 % Beschleuniger A | 5 | 5 | 10 | 20 | 25 | 50 | 75 | 90 | n.b. |
| 9 % Beschleuniger A | 5 | 20 | 30 | 40 | 50 | 120 | 135 | 165 | n.b. |
| 14% Beschleuniger A | 5 | 25 | 50 | 70 | 85 | 140 | 200 | 250 | 400 |
| 14% Beschleuniger B | 5 | 25 | 35 | 45 | 70 | 140 | 180 | 240 | 410 |

| | | | | | | | | | |
|---|---|---|---|---|---|---|---|---|---|
| * bezogen auf Zementgewicht | | | | | | | | | |
| ⁽¹⁾ 500 N entsprechen ca. 1 MPa Bohrkerndruckfestigkeit (⌀ 50 mm) | | | | | | | | | |

Die Druckfestigkeiten wurden an Bohrkernen ∅ 50 mm ermittelt. Die nachfolgenden Resultate repräsentieren Mittelwerte von mindestens 5 Bohrkernproben.

**Tabelle 1.2**

| Beschleunigerdosierung | Druckfestigkeit im Alter von [MPa] | | |
|---|---|---|---|
| *bez. auf Zementgewicht | 1 Tag | 7 Tage | 28 Tage |
| 6 %* Beschleuniger A | 26.1 | 35.1 | 45.4 |
| 9 %* Beschleuniger A | 23.3 | 30.9 | 40.4 |
| 14%* Beschleuniger A | 18.8 | 29.8 | 37.1 |
| 14%* Beschleuniger B | 22.5 | 31.2 | 42.2 |
| 0 %* Referenzbeton | 23.1 | 34.1 | 46.7 |

Es ist offensichtlich, dass beide Flüssigbeschleunigervarianten die Frühfestigkeitsverläufe positiv beeinflussen und je nach Dosierung ähnlich hohe Endfestigkeiten, verglichen mit nicht beschleunigtem Referenzbeton, erlangen.

Hierbei ist zu beachten, dass höhere Dosiermengen die Frühfestigkeitsverläufe beschleunigen, allerdings bewirken sie auch einen höheren Festigkeitsabfall der Endfestigkeiten. Die Zugabe von Hochleistungsverflüssigern (Beschleuniger B) wirkt dem entgegen.

### Beispiel 2

Im Versuchsstollen wurden Nassspritzversuche im Dichtstromverfahren durchgeführt. Zur Verwendung kam eine Kolbenbetonpumpe AL 277 mit einer vorgewählten mittleren Pumpleistung von 6 m³/h. Die 30 m lange Pumpschlauchleitung hatte einen Innendurchmesser von 65 mm; der Dichtstrom wurde ca. 3 m vor der Düse mit Pressluft durch einen Einlochstromwandler aufgerissen. Zur Verwendung kam eine Normaldüse, konisch mit 48 mm Enddurchmesser.

Die Flüssigbeschleunigervarianten wurden mittels einer Dosierpumpe AL 503.1 in den Luftstrom des Einlochstromwandlers zudosiert.

Als Nassmischungen wurden verwendet:

| | | |
|---|---|---|
| CEM I 42.5 (Zementtyp mit einer Normfestigkeit von 42.5 Mpa nach 28 Tagen) | | 425 kg/m³ |
| Hochleistungsverflüssiger/Stabilizer | | 1 % (bez. auf Zementgewicht) |
| Zuschlagstoffe | Sand 0/4 mm | 60 % |
| | Kies 4/8 mm | 40 % |
| W/Z = 0.50 | Ausbreitmass = 46 - 48 cm | |

Der Hochleistungsverflüssiger ist auf Basis eines sulfonierten Vinylcopolymeren (SIKAMENT 10) und der Stabilizer ist ein Verdicker.

Folgende Flüssigbeschleunigergemische wurden getestet:
A) Aluminiumsulfatlösung + organischer Verdicker
B) Aluminiumsulfatlösung + amorphe Kieselsäure
C) Aluminiumsulfatlösung + organischer Verdicker + amorphe Kieselsäure

Das Abbindeverhalten und die Druckfestigkeiten im Alter von 1 Tag, 7 Tagen und 28 Tagen wurden analog Beispiel 1 bestimmt.

**Tabelle 2.1**

| Beschleunigerdosierung | Penetrationswiderstand in [N] ⁽¹⁾ nach | | | | | | | | |
|---|---|---|---|---|---|---|---|---|---|
| **[**Minuten**]** | 1' | 6' | 10' | 20' | 30' | 60' | 90' | 120' | 180' |
| 6 %* Beschleuniger A | 5 | 10 | 15 | 20 | 25 | 45 | 65 | 90 | 250 |
| 11%* Beschleuniger A | 5 | 10 | 20 | 25 | 45 | 80 | 150 | 190 | 330 |
| 11%* Beschleuniger B | 5 | 15 | 30 | 35 | 55 | 100 | 170 | 260 | 390 |
| 6 %* Beschleuniger C | 5 | 5 | 5 | 10 | 15 | 40 | 45 | 90 | 220 |

| | | | | | | | | | |
|---|---|---|---|---|---|---|---|---|---|
| * bezogen auf Zementgewicht | | | | | | | | | |
| ⁽¹⁾ 500 N entsprechen ca. 1 MPa Bohrkerndruckfestigkeit (⌀ 50 mm) | | | | | | | | | |

**Tabelle 2.2**

| Beschleunigerdosierung | Druckfestigkeit im Alter von [MPa] | | |
|---|---|---|---|
| *bez. auf Zementgewicht | 1 Tag | 7 Tage | 28 Tage |
| 6 %* Beschleuniger A | 23.2 | 37.0 | 47.2 |
| 11%* Beschleuniger A | 21.2 | 30.5 | 41.2 |
| 11%* Beschleuniger B | 21.7 | 34.5 | 43.7 |
| 6 %* Beschleuniger C | 21.7 | 40.1 | 51.3 |
| 0 %* Referenzbeton | 21.0 | 36.4 | 48.7 |

Auch in diesem Beispiel wird offensichtlich, dass die Beschleunigungswirkung in den ersten 10 Min. bei allen Varianten relativ ähnlich ist. Den grössten Einfluss auf den weiteren Frühfestigkeitsverlauf übt jedoch die Dosiermenge aus. Leider bewirkt sie auch einen grösseren Abfall der Endfestigkeiten. Bei gleicher Dosierung der Flüssigbeschleuniger zeigt sich, dass die Festigkeitsabfälle (hauptsächlich der 7d und 28d-Werte) bei Verwendung von Aluminiumsulfatlösung ohne Zusatz von amorpher Kieselsäure (Beschleuniger A), stets höher ausfallen als bei Aluminiumsulfatlösung mit amorpher Kieselsäure (Beschleuniger B+C).

### Beispiel 3

Ebenfalls im Versuchsstollen wurden Nassspritzversuche im Dichtstromverfahren, wie im Beispiel 2 beschrieben, durchgeführt. Als Nassgemische wurden verwendet:

| | | |
|---|---|---|
| CEM I 42.5 (Zementtyp mit einer Normfestigkeit von 42.5 Mpa nach 28 Tagen) | | 425 kg/m³ |
| Hochleistungsverflüssiger/Stabilizer | | 1 % (bez. auf Zementgewicht) |
| Zusatzstoff Kieselrauch | | 7 % (bez. auf Zementgewicht) |
| Zuschlagstoffe | Sand 0/4 mm 60 % | |
| | Kies 4/8 mm 40 % | |
| W/Z = 0.48 | Ausbreitmass = 46 -50 cm | |

Der Hochleistungsverflüssiger ist auf Basis eines sulfonierten Vinylcopolymeren (SIKAMENT 10) und der Stabilizer ist ein Verdicker.

Folgende Flüssigbeschleunigergemische wurden getestet:
A) Herkömmliche Alkalialuminatlösung
B) Aluminiumsulfatlösung + organischer Verdicker
C) Aluminiumsulfatlösung + amorphe Kieselsäure + organischer Verdicker

Das Abbindeverhalten und die Druckfestigkeiten wurden analog Beispiel 1 und 2 bestimmt. Zusätzlich wurden die Druckfestigkeiten nach 4 Stunden Abbindezeit mittels Bolzeneindringtiefen-Bestimmung (HILTI-Methode) gemessen. Weiter wurde die Wasserdichtigkeit nach DIN 1048 über die max. Wassereindringtiefe ermittelt.

**Tabelle 3.1**

| Beschleunigerdosierung | Penetrationswiderstand in [N] ⁽¹⁾ nach | | | | | | | | |
|---|---|---|---|---|---|---|---|---|---|
| [Minuten] | 1' | 6' | 10' | 20' | 30' | 60' | 90' | 120' | 180' |
| 5 %* Beschleuniger A | 10 | 45 | 60 | 75 | 90 | 150 | 200 | 290 | 320 |
| 6 %* Beschleuniger B | 5 | 8 | 10 | 15 | 30 | 125 | 220 | 280 | 360 |
| 6 %* Beschleuniger C | 5 | 15 | 25 | 35 | 50 | 200 | 250 | 300 | 390 |

| | | | | | | | | | |
|---|---|---|---|---|---|---|---|---|---|
| * bezogen auf Zementgewicht | | | | | | | | | |
| ⁽¹⁾ 500 N entsprechen ca. 1 MPa Bohrkerndruckfestigkeit (⌀ 50 mm) | | | | | | | | | |

**Tabelle 3.2**

| Beschleunigerdosierung | Druckfestigkeit im Alter von [MPa] | | | |
|---|---|---|---|---|
| *bez. auf Zementgewicht | 1 Tag | 7 Tage | 28 Tage | 90 Tage |
| 5 %* Beschleuniger A | 21.8 | 27.1 | 42.3 | 44.3 |
| 6 %* Beschleuniger B | 23.5 | 34.5 | 48.0 | 52.1 |
| 6 %* Beschleuniger C | 25.4 | 34.7 | 50.9 | 55.8 |

**Tabelle 3.3**

| Beschleunigerdosierung | Druckfestigkeit nach 4 Std. | | Wasserdichtigkeit / DIN 1048 |
|---|---|---|---|
| *bez. auf Zementgew. | Bolzen Eindringtiefe [mm] | Druckfestigkeit [MPa] | max. Eindringtiefe |
| 5 %* Beschleuniger A | > 95 | < 1.5 | 24 mm |
| 6 %* Beschleuniger B | 83.4 | ∼2.0 | 30 mm |
| 6 %* Beschleuniger C | 77.2 | ∼3.0 | 15 mm |

Es wird offensichtlich, dass die untersuchten Flüssigbeschleuniger auf Aluminiumsulfatbasis eine geringere Frühfestigkeitsentwicklung in den ersten 30 Min. im Vergleich mit herkömmlichen Alkalialuminatbeschleunigern aufweisen. Danach nimmt ihre Erhärtungswirkung allerdings zu und übertrifft die des Aluminates. Dies wird auch in den gemessenen Werten der 4 Stunden Festigkeitsprüfung deutlich.

Die Festigkeitsentwicklung über 90 Tage bestätigt den festigkeitssteigernden Einfluss der Aluminiumsulfatbeschleuniger. Hiebei zeigt der Beschleuniger mit amorphem Kieselsäurezusatz (Beschleuniger C) die grösste Festigkeitszunahme. Der Zusatz von Kieselsäure im Beschleuniger C zeigt auch einen günstigen Einfluss auf die Wasserdichtigkeiten an.

### Beispiel 4

Es wurden Nassspritzversuche im Dichtstromverfahren, wie in Beispiel 2 und 3 beschrieben, durchgeführt. Es wurden die gleichen Nassgemische wie unter Beispiel 3 verwendet.

Die folgenden Flüssigbeschleuniger wurden untersucht:
A) Herkömmliche Alkalialuminatlösung
B) Aluminiumsulfatlösung + organischer Verdicker
C) Aluminiumsulfatlösung + amorphe Kieselsäure
D) Aluminiumsulfatlösung + amorphe Kieselsäure + organischer Verdicker

Das Abbindeverhalten und die Druckfestigkeit nach 4h bis 90 Tagen, sowie die Wasserdichtigkeitsbestimmungen wurden wie im Beispiel 3 beschrieben, ermittelt.

Zusätzlich wurden 95 mm Bohrkerne gebohrt, die, nach 28 Tagen Aushärtezeit, in ca. 10 mm dünne Scheiben geschnitten wurden. Danach wurden Auslaugtests bis zu einer Auslaugdauer von 3 Tagen, bei einer Durchflussrate von 300 ml/h und einer exponierten Spritzbetonoberfläche von ca. 1900 cm2 durchgeführt. Die Eluatgehalte an Na-, K- und Ca-Ionen wurden chemisch bestimmt.

**Tabelle 4.1**

| Beschleunigerdosierung | Penetrationswiderstand in [N] ⁽¹⁾ nach | | | | | | | | |
|---|---|---|---|---|---|---|---|---|---|
| [Minuten] | 1' | 6 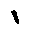 | 10 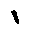 | 20 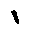 | 30 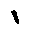 | 60 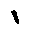 | 90 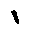 | 120 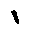 | 180 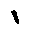 |
| 5 %* Beschleuniger A | 10 | 45 | 60 | 75 | 90 | 150 | 200 | 290 | 320 |
| 11%* Beschleuniger B | 5 | 20 | 30 | 50 | 85 | 260 | 420 | 460 | 480 |
| 11%* Beschleuniger C | 5 | 25 | 50 | 85 | 120 | 320 | 400 | 420 | 460 |
| 11%* Beschleuniger D | 5 | 30 | 40 | 70 | 115 | 260 | 300 | 380 | 460 |

| | | | | | | | | | |
|---|---|---|---|---|---|---|---|---|---|
| * bezogen auf Zementgewicht | | | | | | | | | |
| ⁽¹⁾ 500 N entsprechen ca. 1 MPa Bohrkerndruckfestigkeit (⌀ 50 mm) | | | | | | | | | |

**Tabelle 4.2**

| Beschleunigerdosierung | Druckfestigkeit im Alter von [MPa] | | | |
|---|---|---|---|---|
| * bez. auf Zementgewicht | 1 Tag | 7 Tage | 28 Tage | 90 Tage |
| 5 %* Beschleuniger A | 21.8 | 27.1 | 42.3 | 44.3 |
| 11 %* Beschleuniger B | 19.1 | 32.6 | 43.1 | 48.1 |
| 11 %* Beschleuniger C | 21.4 | 31.9 | 43.7 | 48.1 |
| 11 %* Beschleuniger D | 21.5 | 32.2 | 47.6 | 50.7 |

**Tabelle 4.3**

| Beschleunigerdosierung | Druckfestigkeit nach 4 Std. | | Wasserdichtigkeit / DIN 1048 |
|---|---|---|---|
| * bez. auf Zementgew. | Bolzen Eindringtiefe [mm] | Druckfestigkeit [MPa] | max. Eindringtiefe |
| 5 %* Beschleuniger A | > 95 | < 1.5 | 24 mm |
| 11%* Beschleuniger B | 68.5 | ∼4.0 | 24 mm |
| 11%* Beschleuniger C | 73.4 | ∼3.5 | 63 mm |
| 11%* Beschleuniger D | 63.4 | ∼5.0 | 15 mm |

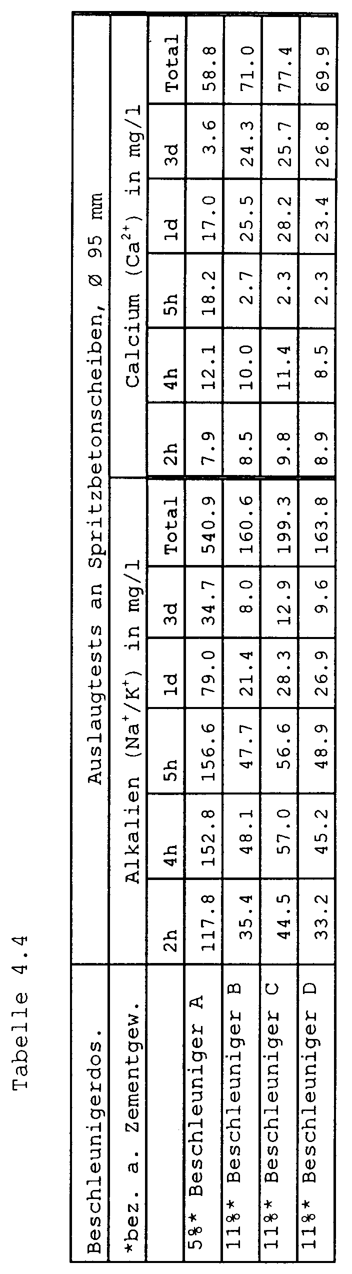

Es wird offensichtlich, dass bei der Dosierung von 11 % alle Flüssigbeschleuniger (B, C, D) auf Aluminiumsulfatbasis sehr ähnliche Frühfestigkeitsverläufe aufweisen. Das System mit amorpher Kieselsäure und organischem Verdicker (D) zeigt tendenziell die besten Endfestigkeiten und weist gegenüber herkömmlichem Aluminatbeschleuniger (A) sogar Festigkeitszunahme um +12.5 % (bei 28 Tagen) und um +14.4 % (bei 90 Tagen) auf. Auch die Druckfestigkeitswerte nach 4 Stunden Erhärtungszeit liegen signifikant höher bei den Flüssigbeschleuniger auf Aluminiumsulfatbasis.

Beschleuniger D zeigt auch bei den Wasserdichtigkeitsprüfungen das beste Resultat. Der Eluatgehalt an Alkalien ist bei den Beschleunigern auf Aluminiumsulfatbasis bis zum Faktor 3.3 tiefer als beim herkömmlichen Alkalialuminat-Beschleunigersystem.

## Patentansprüche

1. Abbinde- und Erhärtungsbeschleuniger enthaltend Aluminiumsalz dadurch gekennzeichnet, dass er a) amorphe Kieselsäure und b) ein anorganisches und/oder organisches Thixotropiermittel und/oder einen organischen Kohlensäureester enthält.

2. Beschleuniger nach Anspruch 1, dadurch gekennzeichnet, dass er im wesentlichen alkali- und chloridfrei ist.

3. Beschleuniger nach Anspruch 1 oder 2, dadurch gekennzeichnet, dass das Aluminumsalz ausgewählt ist aus der Gruppe umfassend Sulfat, Nitrat, Glykolat, Azetat, Formiat oder Mischungen derselben.

4. Beschleuniger nach einem der Ansprüche 1 bis 3, dadurch gekennzeichnet, dass er mindestens 5 Gew.-% amorphe Kieselsäure und bis zu 95 Gew.-% der Aluminiumverbindung enthält.

5. Beschleuniger nach einem der Ansprüche 1 bis 4, dadurch gekennzeichnet, dass er ein Mol-Verhältnis Aluminium zu Sulfat von 0,1 bis 10 aufweist.

6. Beschleuniger nach einem der Ansprüche 1 bis 5, dadurch gekennzeichnet, dass er gelöst oder dispergiert in Wasser vorliegt.

7. Beschleuniger nach einem der Ansprüche 1 bis 6, dadurch gekennzeichnet, dass er mindestens ein Dispergierhilfsmittel enthält.

8. Beschleuniger nach Anspruch 7, dadurch gekennzeichnet, dass das Dispergierhilfsmittel ausgewählt ist aus der Gruppe umfassend Polymere oder Copolymere der Acrylsäure oder Methacrylsäure oder Derivate davon, sulfonierte Melamin- oder Naphthalin-Formaldehydkondensate oder Phosphonsäurederivate oder eine Mischung derselben.

9. Beschleuniger nach einem der Ansprüche 1 bis 8, dadurch gekennzeichnet, dass er mindestens ein Verdickungsmittel enthält.

10. Beschleuniger nach Anspruch 9, dadurch gekennzeichnet, dass das Verdickungsmittel ausgewählt ist aus der Gruppe umfassend Bentonit, Bentone, fermentierte organische Biopolymere, Alginate, Polyglykolether, Acrylat- oder Urethanverdicker, organische Kohlensäureester oder Mischungen derselben.

11. Verfahren zur Beschleunigung des Abbindens und Erhärtens von Zement sowie daraus hergestellten Mörtels und Betons, dadurch gekennzeichnet, dass man einem Gemisch, das den Zement enthält, einen Beschleuniger nach einem der Ansprüche 1 bis 10, in einer Menge von 0,1 bis 20 Gew.-%, bezogen auf das Gewicht des Zementes, zugibt.

12. Verfahren nach Anspruch 11, dadurch gekennzeichnet, dass der pulverförmige Abbinde- und Erhärtungsbeschleuniger mit dem trockenen Zement oder mit dem trockenen Mörtel oder Beton vorgemischt und diese Mischung anschliessend durch Zugabe von Wasser ausgehärtet wird.

13. Verfahren gemäss einem der Ansprüche 11 und 12, dadurch gekennzeichnet, dass der Beschleuniger dem trockenen oder mit Wasser angemachten Bindemittel, Mörtel oder Beton im Werk, auf der Baustelle, im Mischer, in der Förderpumpe, der Förderleitung, der Vorbenetzungsdüse, der Spritzdüse oder über einen statischen Mischer mit einem Pulverdosiergerät oder einem Flüssigdosiergerät direkt in die Mischung oder mit der Förderluft zugegeben wird.

14. Verwendung des Beschleunigers nach einem der Ansprüche 1 bis 10 zur Beschleunigung des Abbindens und Erhärtens von Zement.

15. Verwendung des Abbinde- und Erhärtungsbeschleunigers nach einem der Ansprüche 1 bis 10 in Injektionsschlämmen, im Spritzmörtel oder Spritzbeton nach dem Trocken- oder Nassspritzverfahren.
